# EUROPÄISCHE PATENTANMELDUNG

(11) **EP 0 945 292 A2**
(43) Veröffentlichungstag der Anmeldung: **29.09.1999**
(21) Anmeldenummer: 99103089.1
(22) Anmeldetag: 17.02.1999
(51) Int. Cl.: B60J 1/20

(54) **Lichtschutz für Lichteinfallöffnungen in Kraftfahrzeugen**

(30) Priorität: 26.03.1998 DE 19813498
(71) Anmelder: ORIS FAHRZEUGTEILE HANS RIEHLE GmbH, 71696 Möglingen (DE)
(72) Erfinder: Riehle, Hans, 71638 Ludwigsburg (DE)
(74) Vertreter: Hoeger, Stellrecht & Partner

(57) **Zusammenfassung**

Um einen Lichtschutz für Lichteinfallöffnungen (12) in Kraftfahrzeugen, zu schaffen, welcher sich für jede Art von Lichteinfallöffnungen eignet und außerdem einfach montierbar ist, wird vorgeschlagen, daß der Lichtschutz einen Rahmen mit zwei einander gegenüberliegenden Spannstreben (32,34) aufweist, zwischen denen eine bewegliche, ein Lichtschutzfeld abdeckende Lichtschutzmaterialbahn (36) aufspannbar ist, daß der Rahmen im Abstand voneinander angeordnete Verbindungsstreben aufweist, mit welchen die Spannstreben in ihrer die Lichtschutzmaterialbahn aufspannenden Stellung haltbar sind, und daß der Rahmen Fixierelemente aufweist, die an einem Rand der Lichteinfallöffnung kraftbeaufschlagt anlegbar sind und in dieser kraftbeaufschlagt angelegten Stellung den Rahmen mit der Lichtschutzmaterialbahn (36) nahe der Lichteinfallöffnung fixieren.

## Beschreibung

Die Erfindung betrifft einen Lichtschutz für Lichteinfallöffnungen in Kraftfahrzeugen. Als Lichtschutz für Lichteinfallöffnungen in Kraftfahrzeugen sind beispielsweise im Fall einer Verwendung des Lichtschutzes als Sonnenschutz in sich steife, beispielsweise aus Pappe hergestellte, Elemente bekannt, die beispielsweise hinter eine Frontschutzscheibe gestellt werden können, um eine allzu starke Aufheizung des Fahrzeuginnern zu verhindern.

Ferner sind biegeschlaffe Sonnenschutzmaterialbahnen bekannt, die vor Lichteinfallöffnungen von Kraftfahrzeugen, beispielsweise vor Seitenfenster, gehängt werden können, um ebenfalls als Sonnenschutz zu dienen.

All die bekannten Lösungen haben den Nachteil, daß sie sich nicht für stark gegenüber einer Vertikalen geneigte Lichteinfallöffnungen eignen.

Der Erfindung liegt daher die Aufgabe zugrunde, einen Lichtschutz für Lichteinfallöffnungen von Kraftfahrzeugen der gattungsgemäßen Art zu schaffen, welcher sich für jede Art von Lichteinfallöffnungen eignet und außerdem einfach montierbar ist.

Diese Aufgabe wird bei einem Lichtschutz der eingangs beschriebenen Art erfindungsgemäß dadurch gelöst, daß der Lichtschutz einen Rahmen mit zwei einander gegenüberliegenden Spannstreben aufweist, zwischen denen eine bewegliche, ein Lichtschutzfeld abdeckende Lichtschutzmaterialbahn aufspann-bar ist, daß der Rahmen im Abstand voneinander angeordnete Verbindungsstreben aufweist, mit welchen die Spannstreben in ihrer die Lichtschutzmaterialbahn aufspannenden Stellung haltbar sind, und daß der Rahmen Fixierelemente aufweist, die an einem Rand der Lichteinfallöffnung kraftbeaufschlagt anlegbar sind und in dieser kraftbeaufschlagt angelegten Stellung den Rahmen mit der Lichtschutzmaterialbahn nahe der Lichteinfallöffnung fixieren.

Der Vorteil der erfindungsgemäßen Lösung ist darin zu sehen, daß einerseits durch die beiden Spannstreben eine definierte Ausrichtung und Aufspannung der Lichtschutzmaterialbahn vorgebbar ist und daß andererseits die Fixierelemente eine einfache Möglichkeit schaffen, den Rahmen an Rändern der Lichteinfallöffnung zu fixieren, insbesondere so, daß der Lichtschutz einfach anbringbar und abnehmbar ist.

Hinsichtlich der Ausbildung der Fixierelemente wurden dabei keine näheren Angaben gemacht. So sieht eine bevorzugte Ausführungsform vor, daß die Fixierelemente ausgehend von einer Ruhestellung in Richtung des Lichtschutzfeldes gegen eine Kraft eines elastischen Kraftspeichers bewegbar sind und in der den Rahmen an den Rändern der Lichteinfallöffnung fixierenden Stellung durch den elastischen Kraftspeicher kraftbeaufschlagt sind.

Bei dieser Lösung ist somit vorgesehen, daß die Fixierelemente beim Einsetzen des Rahmens in die Ränder der Lichteinfallöffnung von ihrer Ruhestellung in Richtung des Lichtschutzfeldes bewegbar sind und somit ein Spannen des elastischen Kraftspeichers erfolgt, der in der in die Ränder der Lichteinfallöffnung eingesetzten Stellung des Rahmens dann die Fixierelemente in Richtung der Ränder der Lichteinfallöffnung beaufschlagt.

Die Fixierelemente können hierzu beliebig ausgeführt sein. Beispielsweise wäre es denkbar, als Fixierelemente Pufferkörper aus einem elastischen Material vorzusehen, welche an dem Rahmen sitzen, wobei das elastische Material dann selbst als Kraftspeicher wirken würde.

Es wäre aber auch denkbar, an dem Rahmen Federbügel als Fixierelemente vorzusehen, die in ihrer Ruhestellung nach außen über den Rahmen überstehen und ausgehend von dieser Ruhestellung gegen eine durch Deformation des Federbügels entstehende elastische Kraft in Richtung des Lichtschutzfeldes bewegbar sind.

Derartige Fixierelemente können auch an jeder Stelle des Rahmens angeordnet sein, solange eine ausreichende Zahl von Fixierelementen für eine sichere Fixierung des Rahmens vorliegt.

Beispielsweise ist vorgesehen, daß die Fixierelemente an den Streben des Rahmens gehalten sind. Dies ist eine besonders einfache und einfach zu realisierende Lösung.

Dabei können die Fixierelemente noch selbst separate, auf den jeweiligen Streben sitzende Teile sein.

Eine aufgrund ihrer konstruktiven Einfachheit besonders günstige Lösung sieht dabei vor, daß die Fixierelemente zumindest Teilbereiche der Streben umfassen, d. h., daß Teile der Streben selbst Teile der Fixierelemente darstellen.

Im einfachsten Fall ist hierbei vorgesehen, daß zumindest ein Teilbereich einer Strebe auch Teil eines Fixierelements ist.

Dies kann im einfachsten Fall so aussehen, daß ein Abschnitt einer der Streben selbst das Fixierelement bildet.

Ist beispielsweise vorgesehen, daß das Fixierelement formschlüssig an einem Rand der Lichteinfallöffnung fixierbar ist, so ist eine derartige Bildung des Fixierelements durch einen Teil einer Strebe ausreichend.

Ist andererseits vorgesehen, daß das Fixierelement den Rahmen durch kraftschlüssiges Anlegen an dem Rand der Lichteinfallöffnung fixieren soll, so ist es besonders günstig, wenn das Fixierelement eine rutschsichere Anlagefläche aufweist. Eine derartige rutschsichere Anlagefläche läßt sich beispielsweise durch Vorsehen eines weichelastischen Materials, beispielsweise eines Gummimaterials, auf einem Fixierelementgrundkörper realisieren.

Besonders günstig realisierbar ist diese Lösung dann, wenn die rutschsichere Anlagefläche durch einen Überzug über einen Fixierelementgrundkörper gebildet ist.

Ein derartiger Fixierelementgrundkörper kann dabei vorteilhafterweise ein Teilbereich einer Strebe, im Extremfall sogar die ganze Strebe sein.

Der Überzug für den Fixierelementgrundkörper kann beispielsweise als schlauchförmiger Überzug über den Fixierelementgrundkörper ausgebildet sein. Eine besonders günstige Lösung sieht jedoch vor, daß der die rutschsichere Anlagefläche bildende Überzug über den Fixierelementgrundkörper, in diesem Fall ausgebildet als zumindest ein Teilbereich einer Strebe, durch ein Halteelement für die Lichtschutzmaterialbahn gebildet ist.

Damit kann das Halteelement zwei Funktionen erfüllen, nämlich einerseits die rutschsichere Anlagefläche zu bilden und andererseits gleichzeitig zur Fixierung der Sonnenschutzmaterialbahn an der jeweiligen Strebe dienen.

Das Halteelement könnte in diesem Fall ein Formteil aus einem elastischen Material sein, welches einerseits die Spannstrebe umgreift und mit diesem die Spannstrebe umgreifenden Bereich die rutschsichere Anlagefläche bildet und andererseits an der Lichtschutzmaterialbahn fixierbar ist.

Eine andere und insbesondere einfach realisierbare Lösung sieht dabei vor, daß das Halteelement einen Materialstreifen aufweist, welcher U-förmig zumindest einem Teilbereich der jeweiligen Strebe umschlingt und mit über die Strebe überstehenden Bereichen mit der Lichtschutzmaterialbahn verbunden ist.

Eine optisch besonders gefällige Lösung sieht vor, daß das Halteelement ein sich längs der jeweiligen Strebe erstrecken-der Materialstreifen ist, welcher die gesamte Strebe umschlingt und mit über die Strebe überstehenden Bereichen die Lichtschutzmaterialbahn hält.

Hinsichtlich des Vorsehens der elastischen Kraftspeicher wurden in dem Fall, in welchem zumindest Teile der Streben Teile der Fixierelemente bilden, keine näheren Angaben gemacht. So sieht ein vorteilhaftes Ausführungsbeispiel vor, daß der elastische Kraftspeicher für die Beaufschlagung der Fixierelemente an den Streben angeordnet ist.

Beispielsweise kann der elastische Kraftspeicher dabei Teil einer Strebe sein, beispielsweise dadurch, daß ein Abschnitt der Strebe als elastisch deformierbarer Abschnitt ausgebildet ist.

Ein derartiger Abschnitt kann beispielsweise ein Mittelabschnitt einer Strebe sein, es ist aber auch denkbar, Eckabschnitte der Streben als elastisch deformierbare Abschnitte auszubilden.

Elastisch deformierbare Abschnitte der Strebe lassen sich dabei besonders vorteilhaft durch Bögen oder Mäander der Strebe realisieren, wobei ein derartiger Bogen oder ein Mäander durch einen Abschnitt der Strebe aus einem elastisch biegbaren, beispielsweise federnden Material gebildet ist.

Eine weitere Möglichkeit zum Vorsehen eines elastischen Kraftspeichers an den jeweiligen Streben ist die, die Streben mehrteilig auszubilden und ein Federelement zwischen mindestens zwei Strebenteilen vorzusehen, welches eine Relativbewegung der Strebenteile zueinander und somit eine Variation des Abstandes zwischen Enden der jeweiligen Strebe erlaubt.

Vorzugsweise ist dabei die Strebe von einer Ruhestellung, in welcher das Federelement nicht belastet ist, in eine Fixierstellung bringbar, in welcher das Federelement als elastischer Kraftspeicher das Fixierelement beaufschlagt, und darüber hinaus auch noch in eine Montagestellung bringbar, in welcher das Federelement noch stärker deformiert ist, um die Fixierelemente an den Rändern der Lichteinfallöffnung anlegen zu können.

Im Fall mehrteiliger Streben sieht ein besonders vorteilhaftes Ausführungsbeispiel vor, daß die Streben in ihre mehreren Strebenteile zerlegbar sind, um den Rahmen für die Aufbewahrung des Lichtschutzes verkleinerbar und somit einfach verstaubar zu gestalten.

Beispielsweise ist bei mehrteiligen Streben vorgesehen, daß die Strebenteile mittels Steckverbindungen zusammensteckbar sind.

Eine besonders günstige Lösung sieht dabei vor, daß in der Steckverbindung für die Strebenteile der elastische Kraftspeicher angeordnet ist.

Beispielsweise ist hierzu die Steckverbindung aus einer an einem Strebenteil vorgesehenen Aufnahme und einem an einem am anderen Strebenteil vorgesehenen und in die Aufnahme einsteckbaren Endstück gebildet, und in der Aufnahme ist ferner eine Feder vorgesehen, welche sich einerseits in der Aufnahme und andererseits am Endstück abstützt.

Hinsichtlich der Art und Ausbildung der Lichtschutzmaterialbahn wurden bislang keine näheren Angaben gemacht. So wäre es beispielsweise denkbar, die Lichtschutzmaterialbahn als lichtdichte Materialbahn auszubilden, um mit dem erfindungsgemäßen Lichtschutz Lichteinfallöffnungen völlig abzudunkeln, wie dies beispielsweise bei Campingfahrzeugen zweckmäßig wäre.

Ein anderes und ein besonders weites Anwendungsfeld eröffnendes Ausführungsbeispiel sieht vor, daß die Lichtschutzmaterialbahn als Sonnenschutzmaterialbahn ausgebildet ist und somit noch einen Teil des Lichts durchläßt und lediglich einen Teil des durch die Lichteinfallöffnung einfallenden Lichts am Eintreten in das Kraftfahrzeug hindert.

Die Lichtschutzmaterialbahn ist vorzugsweise auf ihrer dem einfallenden Licht zugewandten Seite reflektierend ausgebildet, um eine zu starke Aufheizung derselben zu verhindern.

Eine derartige lichtdurchlässige Lichtschutzmaterialbahn könnte beispielsweise aus einer insgesamt teilweise lichtdurchlässigen Folie ausgebildet sein. Eine andere vorteilhafte Lösung sieht dabei vor, daß die Lichtschutzmaterialbahn mit Durchbrechungen zwischen lichtundurchlässigen Bereichen versehen ist, durch welche das Licht hindurchtreten kann.

Derartige Durchbrechungen könnten großflächige Durchbrechungen sein, ein besonders Zweckmäßiger Sonnenschutz ist jedoch dann erreichbar, wenn die Durchbrechungen durch eine Vielzahl von kleinen beispielsweise in einem Raster nebeneinanderliegenden Öffnungen ausgebildet sind.

Im Falle von in der Lichtschutzmaterialbahn vorgesehenen Durchbrechungen ist vorzugsweise vorgesehen, daß die Lichtschutzmaterialbahn als netzartiges Gewebe ausgebildet ist.

Um ferner ein stets vorteilhaftes Aussehen des erfindungsgemäßen Lichtschutzes zu gewährleisten, ist vorzugsweise vorgesehen, daß die Lichtschutzmaterialbahn als elastische Materialbahn ausgebildet ist, welche somit stets zwischen den Spannstreben gespannt verbleibt und somit im wesentlichen nicht durchhängt, insbesondere auch in der in an den Rändern der Lichteinfallöffnung fixierten Stellung nicht durchhängt, sondern sich aufgespannt zwischen den Spannstreben erstreckt.

Um insbesondere bei zerlegbaren Streben ein einfaches Verstauen des Lichtschutzes zu gewährleisten, ist vorzugsweise vorgesehen, daß die Lichtschutzmaterialbahn als biegeschlaffe Materialbahn ausgebildet ist.

Hinsichtlich der Form des Rahmens wurden bislang keine näheren Angaben gemacht. So könnte die Form des Rahmens völlig unabhängig von der abzudeckenden Lichteinfallöffnung ausgebildet sein. Ein besonders vorteilhaftes Aussehen des erfindungsgemäßen Lichtschutzes im die Lichteinfallöffnung abdeckenden Zustand läßt sich insbesondere dann erreichen, wenn der Rahmen zumindest teilweise einer Randkontur der Lichteinfallöffnung angepaßt ist.

Besonders günstig ist es dabei, wenn beispielsweise die Spannstreben der Randkontur der Lichteinfallöffnung angepaßt sind.

Alternativ oder ergänzend zur Anpassung der Spannstreben ist es vorteilhaft, wenn die Verbindungsstreben der Randkontur der Lichteinfallöffnung angepaßt sind.

Ein besonders vorteilhaftes Fixieren des Rahmens läßt sich dann erreichen, wenn die Randkontur der Lichteinfallöffnung durch eine Randfläche der Innenverkleidung der Karosserie gebildet ist, an welcher dann der Rahmen fixierbar ist.

Die erfindungsgemäße Aufgabe wird darüber hinaus durch ein Kraftfahrzeug mit einer Karosserie und einer in dieser vorgesehenen Lichteinfallöffnung erfindungsgemäß dadurch gelöst, daß in der Lichteinfallöffnung ein Lichtschutz nach einem der voranstehenden Ausführungsbeispiele angeordnet ist.

Besonders günstig ist es dabei, wenn der Rahmen an einer Randkontur der Lichteinfallöffnung angelegt ist, wobei die Innenkontur vorzugsweise durch die Innenverkleidung der Karosserie gebildet ist.

Vorzugsweise ist dabei die Innenverkleidung mit einer Randfläche versehen, welche sich quer zu einer Fläche erstreckt, in welcher die Lichteinfallöffnung liegt. Dies hat den Vorteil, daS in einfacher Weise die Fixierelemente an der Randfläche aufgelegt und an dieser beispielsweise kraftschlüssig fixierbar sind.

Sollte die Form der Randflächen so sein, daß eine kraftschlüssige Fixierung der Fixierelemente an diesen problematisch ist, so sieht eine weitere vorteilhafte Lösung vor, daß die Innenverkleidung Formschlußelemente zur Aufnahme der Fixierelemente aufweist, d. h., daß zwischen den Fixierelementen und den Formschlußelementen eine formschlüssige Verbindung möglich ist und somit auch eine formschlüssige Fixierung des erfindungsgemäßen Lichtschutzes.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: einen Schnitt durch einen Karosserieabschnitt eines Kraftfahrzeugs mit einer Lichteinfallöffnung und einem die Lichteinfallöffnung abdeckenden ersten Ausführungsbeispiel eines erfindungsgemäßen Lichtschutzes;
- Fig. 2: eine Draufsicht auf das erste Ausführungsbeispiel des erfindungsgemäßen Lichtschutzes;
- Fig. 3: einen vergrößerten Schnitt längs Linie 3-3 in Fig. 2 mit zusätzlicher Darstellung der Randflächen;
- Fig. 4: eine ausschnittsweise vergrößerte Darstellung eines Bereichs A in Fig. 2;
- Fig. 5: eine Darstellung ähnlich Fig. 2 mit zerlegter Verbindungsstrebe;
- Fig. 6: eine Darstellung des ersten Ausführungsbeispiels des erfindungsgemäßen Lichtschutzes im zerlegten Zustand;
- Fig. 7: eine Draufsicht auf ein zweites Ausführungsbeispiel eines erfindungsgemäßen Lichtschutzes;
- Fig. 8: eine ausschnittsweise vergrößerte Darstellung eines Eckbereichs B in Fig. 7 mit teilweise weggebrochener Lichtschutzmaterialbahn;
- Fig. 9: eine Draufsicht auf ein drittes Ausführungsbeispiel eines erfindungsgemäßen Lichtschutzes ähnlich Fig. 2 mit durchgezogen gezeichneter Darstellung des Rahmens und gestrichelter Darstellung von Haltestreifen und Lichtschutzmaterialbahn;
- Fig. 10: eine ausschnittsweise vergrößerte Darstellung des Eckbereichs C in Fig. 9;
- Fig. 11: eine Ansicht eines vierten Ausführungsbeispiels eines erfindungsgemäßen Lichtschutzes.

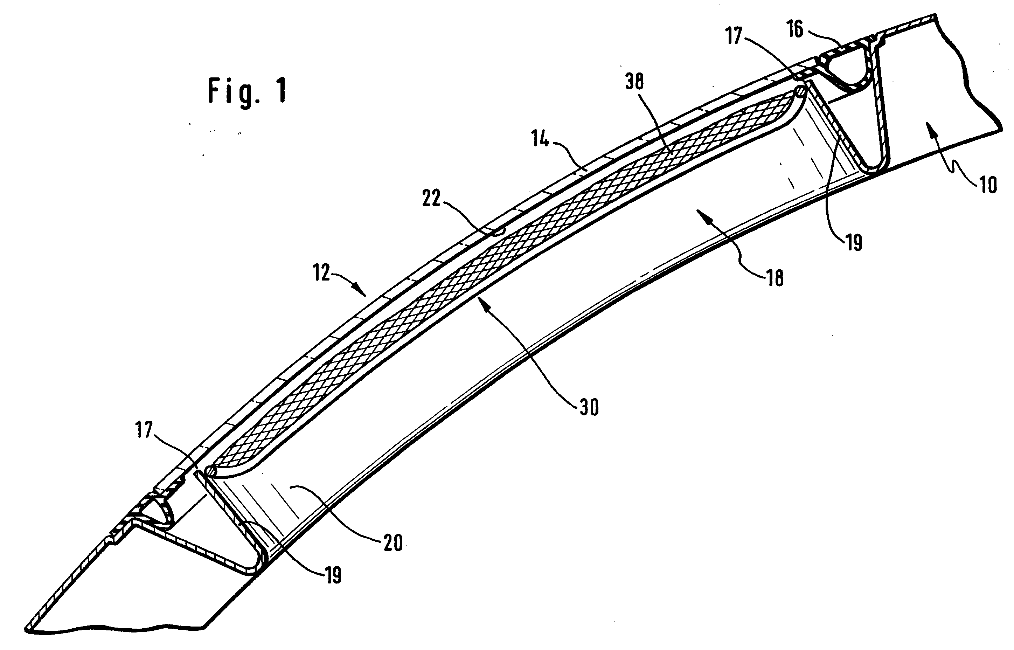

Eine in Fig. 1 ausschnittsweise dargestellte und als Ganzes mit 10 bezeichnete Karosserie eines Kraftfahrzeugs umfaßt eine Lichteinfallöffnung 12, welche mit einer Scheibe 14 verschlossen ist, wobei die Scheibe 14 vorzugsweise in eine umlaufende Fassung 16 aus Gummi eingesetzt ist, welche eine Verbindung zwischen der Scheibe 14 und der Karosserie 10 darstellt.

Ferner ist die Karosserie 10 auf einer Innenseite der Scheibe 14 mit einer die Lichteinfallöffnung 12 umschließenden und eine Randkontur 17 derselben bildenden Innenverkleidung 18 versehen, welche zur Bildung der Randkontur 17 beispielsweise als Kunststoffteil mit einer Umbiegung 19 ausgebildet ist, welche eine Randfläche 20 bildet, die die Lichteinfallöffnung 12 entlang ihrer Randkontur 17 umschließt und quer Zu einer inneren Oberfläche 22 der Scheibe 14 verläuft, wobei hierunter ein Verlauf der Randfläche 20 in einem Winkelbereich von 60° bis 120° relativ zur inneren Oberfläche 22 der Scheibe 14 zu verstehen ist.

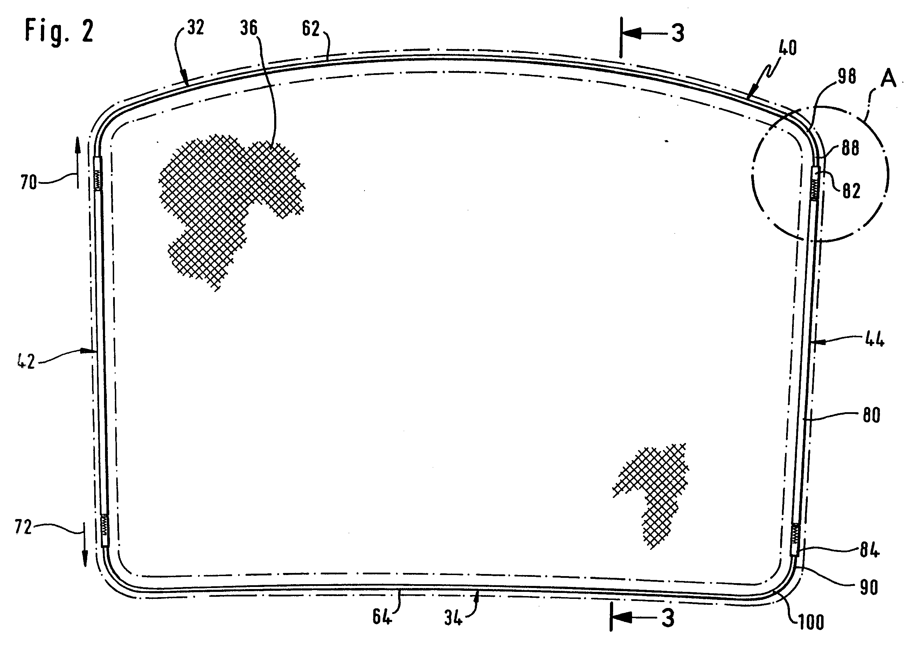

Die Lichteinfallöffnung 12 ist durch einen als Ganzes mit 30 bezeichneten als Sonnenschutz ausgebildeten Lichtschutz verschließbar, welcher, wie in Fig. 2 dargestellt, eine erste Spannstrebe 32 und eine zweite Spannstrebe 34 aufweist, die einander gegenüberliegend angeordnet sind und zwischen denen eine Sonnenschutzmaterialbahn 36 aufspannbar ist.

Die beiden Spannstreben 32 und 34 sind Teil eines als Ganzes mit 40 bezeichneten Rahmens, welcher neben den zwei im Abstand voneinander angeordneten Spannstreben 32 und 34 noch zwei Verbindungsstreben 42 und 44 aufweist, die ebenfalls im Abstand voneinander angeordnet sind und die Spannstreben 32 und 34 in einer die Sonnenschutzmaterialbahn 36 aufspannenden und ein Sonnenschutzfeld übergreifenden Stellung halten.

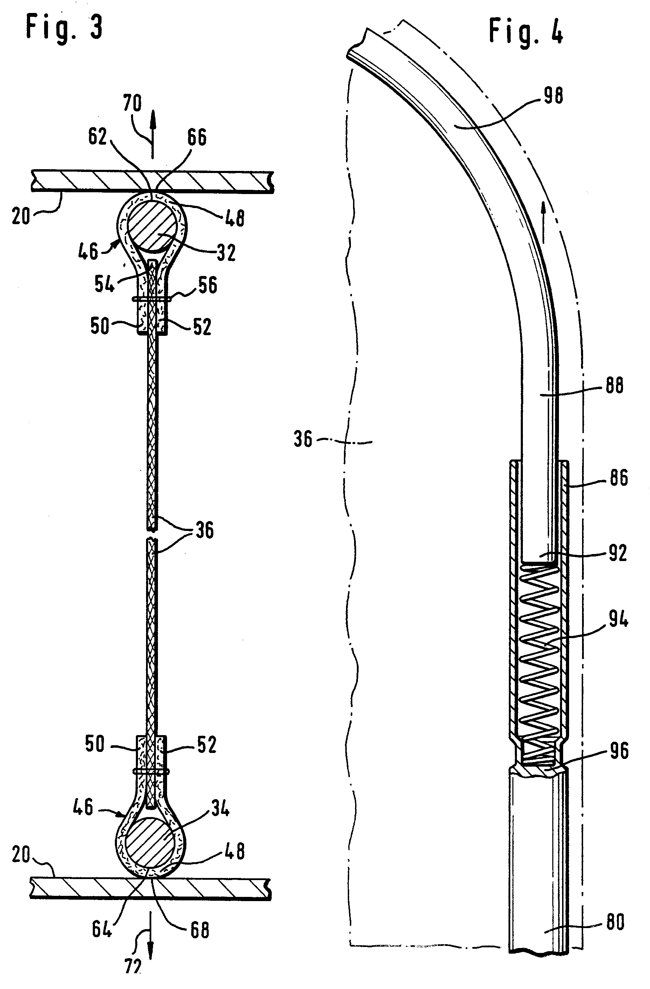

Wie in Fig. 3 dargestellt, erfolgt eine Verbindung zwischen der Sonnenschutzmaterialbahn 36 und den Spannstreben 32 und 34 dadurch, daß die Spannstreben 32 und 34 von einem U-förmig gefalteten Haltestreifen 46 umschlungen sind, der mit einem Bogenstück 48 die jeweilige Spannstrebe 32 oder 34 umgibt und mit Endstücken 50 und 52 auf gegenüberliegenden Seiten eines Randbereichs 54 der Sonnenschutzmaterialbahn 36 anliegt, wobei eine Verbindung zwischen den Endstücken 50 und 52 und dem zwischen diesen liegenden Randbereich 54 beispielsweise mittels einer Naht 56 erfolgt, die jedoch aber auch durch eine Verschweißung oder eine Verklebung der Endstücke 50 und 52 mit dem Randbereich 54 ersetzt werden kann.

Bei dem ersten Ausführungsbeispiel sind die Spannstreben 32 und 34 in ihrer Form den entsprechenden Abschnitten der Randkontur 17 und der entsprechenden Randfläche 20 der Innenverkleidung 18 angepaßt, so daß diese mit einem wesentlichen Teil ihres der Sonnenschutzmaterialbahn 36 abgewandten äußeren Randflächenbereichs 62 und 64 in der Lage sind, das auf diesen aufliegende Bogenstück 48 des Haltestreifens 46 in Richtung der Randfläche 20 zu beaufschlagen und somit mit einer Außenseite 66, 68 an der Randfläche 20 anzulegen.

Um hierdurch eine sichere Fixierung des Rahmens 40 an der Randfläche 20 der Innenverkleidung 18 zu erhalten, ist vorzugsweise der Haltestreifen 46 zumindest im Bereich des Bogenstücks 48 aus einem Material, welches auf der Randfläche 20 der Innenverkleidung 18 gut haftet, beispielsweise aus einem ausreichend weichen und rutschfesten Material, wobei die Bogenstücke 48 durch die Randflächenbereiche 62 und 64 mit quer zur jeweiligen Randfläche 20 verlaufenden Kräften 70, 72 beaufschlagt sind, um hierdurch eine feste Fixierung der Spannstreben 32 und 34 an der Randfläche 20 der Innenverkleidung 18 zu erhalten.

Zum Aufbringen der Kräfte 70 und 72 sind beispielsweise die Verbindungsstreben 42 und 44 so ausgebildet, daß sie die Spannstreben 32 und 34 mit den Kräften 70 und 72 beaufschlagen und somit in der Lage sind, in dem in die Lichteinfallöffnung 12 eingesetzten Zustand des Sonnenschutzes 30 die Spannstreben 32 und 34 fest an der Randfläche 20 der Innenverkleidung 18 zu fixieren.

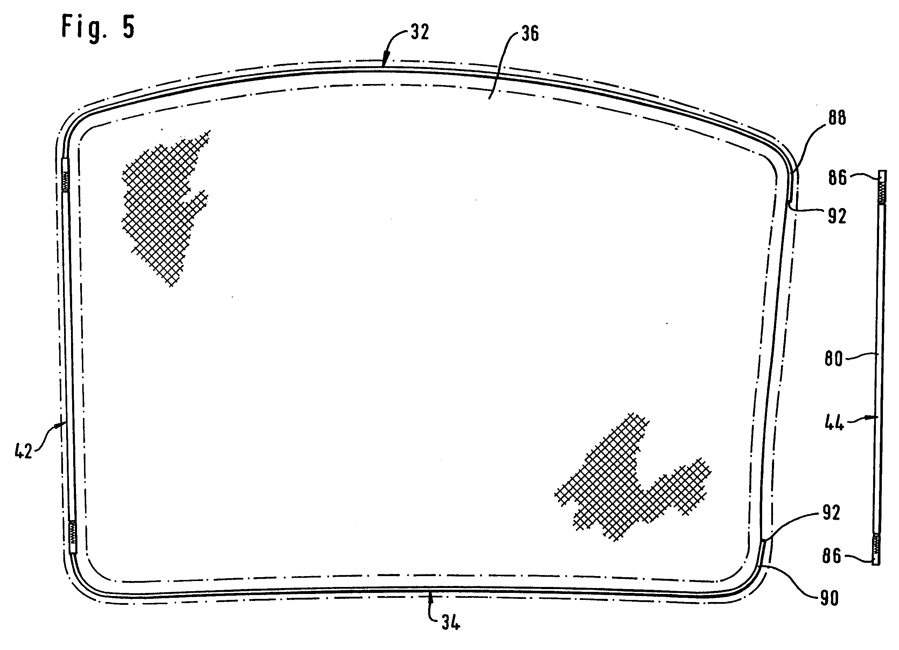

Die Verbindungsstreben 44 sind beispielsweise beim ersten Ausführungsbeispiel so ausgebildet, daß diese, wie in Fig. 2 und Fig. 4 dargestellt, jeweils ein Mittelteil 80 umfassen, welches an seinen beiden entgegengesetzten Enden 82 und 84 jeweils eine Hülse 86 aufweist, in welche Endteile 88, 90 der Verbindungsstreben 44 mit einem Endstück 92 einführbar sind, das in der Hülse 86 jeweils geführt ist und auf welches eine Druckfeder 94 wirkt, die sich auf einer dem Endstück 92 gegenüberliegenden Seite an einem Hülsenboden 96 abstützt. Somit wirken die Druckfedern 94 an jedem der Enden 82 und 84 auf das jeweilige Endstück 92 des entsprechenden Endteils 88 bzw. 90 und beaufschlagen somit das jeweilige Endteil 88 bzw. 90 mit den entsprechenden Kräften 70, 72.

Vorzugsweise sind dabei beim ersten Ausführungsbeispiel die Endteile 88 und 90 der verbindungsstreben 44 einstückig an die Spannstreben 32 angeformt und gehen jeweils über eine Umbiegung 98 bzw. 100 in die jeweilige Spannstrebe 32 bzw. 34 über.

Da jedes der Mittelteile 80 an den gegenüberliegenden Enden 82 und 84 jeweils mit einer Hülse 86 und einer darin angeordneten Druckfeder 94 versehen ist, welche auf das in die Hülse 86 einführbare jeweilige Endstück 92 wirkt, sind die beiden Spannstreben 32 und 34 jeweils gegen die elastische Kraftwirkung der Druckfedern 94 in Richtung aufeinander zu in eine Montagestellung bewegbar, um in dieser Montagestellung der Spannstreben 32 und 34 den Sonnenschutz 30 in die von der Randfläche 20 definierte Lichteinfallöffnung 12 einsetzen zu können, beispielsweise dadurch, daß eine der Spannstreben, insbesondere die Spannstrebe 34, auf die entsprechende Randfläche 20 aufgesetzt wird und die andere Spannstrebe, in diesem Fall dann die Spannstrebe 32, in Richtung der Spannstrebe 34 beaufschlagt wird, so daß die Druckfedern 94 zusammengedrückt werden und sich die Verbindungsstreben 42 und 44 in ihrer Länge verkürzen. In dieser Montagestellung ist dann der Sonnenschutz 30 so weit verschwenkbar, bis auch die Spannstrebe 32 an dem entsprechenden Abschnitt der Randfläche 20 zur Anlage gebracht werden kann und somit durch die Kraft der Druckfedern 94 mit dem äußeren Randflächenbereich 62 das entsprechende Bogenstück 48 des Haltestreifens 46 an der Randfläche 20 anlegt, wobei in dieser Stellung die Verbindungsstreben 42 und 44 in ihrer Fixierstellung stehen und in dieser den gesamten Sonnenschutz 30 dadurch fixieren, daß die äußeren Randflächenbereiche 62 und 64 mit den Kräften 70 und 72 die Bogenstücke 48 der Haltestreifen 46 mit ihren Außenseiten 66 bzw. 68 an den entsprechenden Abschnitten der Randfläche 20 in Anlage halten und somit den gesamten Sonnenschutz 30 vorzugsweise kraftschlüssig fixieren.

Ferner ist der gesamte Rahmen 40 so ausgebildet, daß auch die Verbindungsstreben 42 und 44 möglichst nahe der entsprechenden Abschnitte der Randfläche 20 der Innenverkleidung 18 verlaufen und somit die gesamte Sonnenschutzmaterialbahn 36 im wesentlichen die gesamte Lichteinfallöffnung 12 abdeckt.

Die Sonnenschutzmaterialbahn 36 ist dabei vorzugsweise ebenfalls aus elastischem Material ausgebildet, welches in Richtung der Kräfte 70 und 72 elastisch dehnbar ist, so daß die Sonnenschutzmaterialbahn 36 in der Fixierstellung der Verbindungsstreben 42 und 44 bei in die Randflächen 20 der Innenverkleidung 18 eingesetztem Rahmen 40 straff zwischen den Spannstreben 32 und 34 gespannt verbleibt.

Vorzugsweise ist, wie in Fig. 1 dargestellt, die Sonnenschutzmaterialbahn aus einem Gewebematerial hergestellt, welches Durchbrechungen 38 aufweist, durch welche noch ein Teil des auf die Lichteinfallöffnung 12 fallenden Lichts hindurchtreten und einen Innenraum der Karosserie 10 erhellen kann, während der andere Teil des Lichts, welcher auf das Gewebe selbst trifft, nicht in das Innere der Karosserie 10 eintreten kann und entweder absorbiert oder reflektiert wird.

Um den Sonnenschutz 30 gemäß dem ersten Ausführungsbeispiel leicht verstauen zu können, ist, wie in Fig. 5 dargestellt, die Sonnenschutzmaterialbahn 36 so weit in Richtung der Kräfte 70 und 72 dehnbar, daß die Endteile 88 und 90 der Verbindungsstreben 42 und 44 so weit auseinanderbewegbar sind, daß die jeweiligen Endstücke 92 der Endteile 88 und 90 aus den Hülsen 86 herausbewegbar sind. Dadurch sind die Verbindungsstreben 42 und 44 zerlegbar, wobei die jeweiligen Endteile 88 und 90 noch an den Spannstreben 32 und 34 angeformt bleiben, während das Mittelteil 80 als Ganzes entfernbar ist.

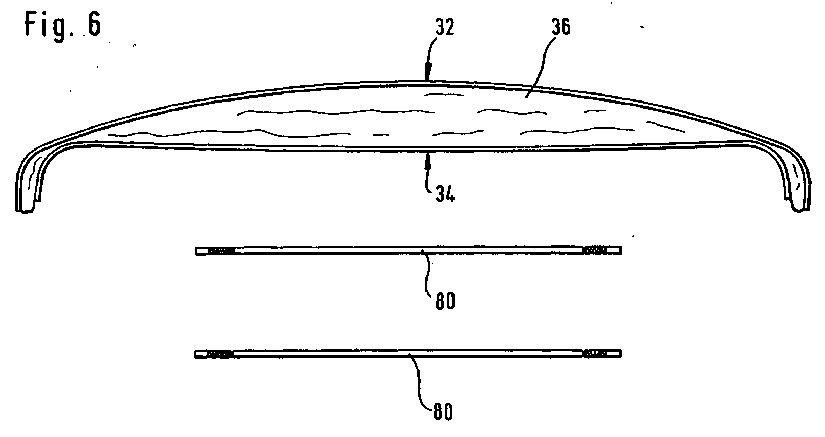

Damit ist der erfindungsgemäße Sonnenschutz, wie in Fig. 6 dargestellt, dadurch klein zusammenlegbar, daß die Spannstreben 32 und 34 möglichst dicht nebeneinandergelegt werden und die Sonnenschutzmaterialbahn 36 zwischen diesen als biegeschlaffes Material liegt, während die beiden Mittelteile 80 der Verbindungsstreben 42 und 44 ebenfalls ungefähr parallel zu den Spannstreben 32 und 34 gelegt werden können und somit der gesamte Sonnenschutz 30 in einer zeichnerisch nicht dargestellten Aufbewahrungskassette oder Verpackungstasche verstaut werden kann.

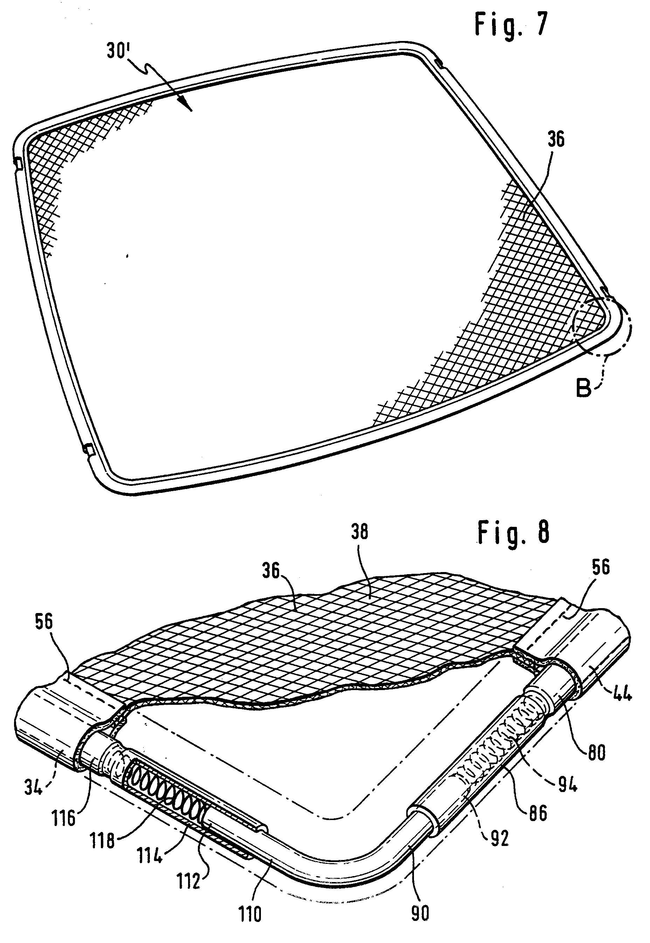

Bei einem zweiten Ausführungsbeispiel eines erfindungsgemäßen Sonnenschutzes 30', dargestellt in Fig. 7 und 8, sind diejenigen Teile, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen werden kann.

Im Gegensatz zum ersten Ausführungsbeispiel sind, wie in Fig. 8 dargestellt, sowohl die beiden Spannstreben 32 und 34 als auch die Verbindungsstreben 42 und 44 mehrteilig ausgeführt, nämlich mit Endteilen 88 und 90 im Falle der Verbindungsstreben 42 und 44 und Endteilen 110 im Falle der Spannstreben 32 und 34, die jeweils mit ihren Endstücken 92 und 112 in Hülsen 86 bzw. 114 der Mittelteile 80 im Fall der Verbindungsstreben 42, 44 bzw. 116 im Fall der Spannstreben 32 und 34 eingreifen, wobei jeweils in den Hülsen 86 bzw. 114 eine Druckfeder 94 bzw. 118 angeordnet ist, so daß sowohl die Verbindungsstreben 42 und 44 als auch die Spannstreben 32 und 34 längenvariabel sind und somit eine Fixierung des Sonnenschutzes entweder durch Verspannen mittels der Spannstreben 32 und 34 oder durch Verspannen mittels der Verbindungsstreben 42 und 44 oder durch allseitiges Verspannen sowohl der Spannstreben 32 und 34 als auch der Verbindungsstreben 42 und 44 mit der Randfläche 20 in der Lichteinfallöffnung 12 fixierbar ist, wobei sowohl die Spannstreben 32, 34 als auch die Verbindungsstreben 42, 44 mit dem Haltestreifen 46 überzogen sind und somit jeweils das Bogenstück 48 mit seiner Außenseite an der Randfläche 20 angelegt wird.

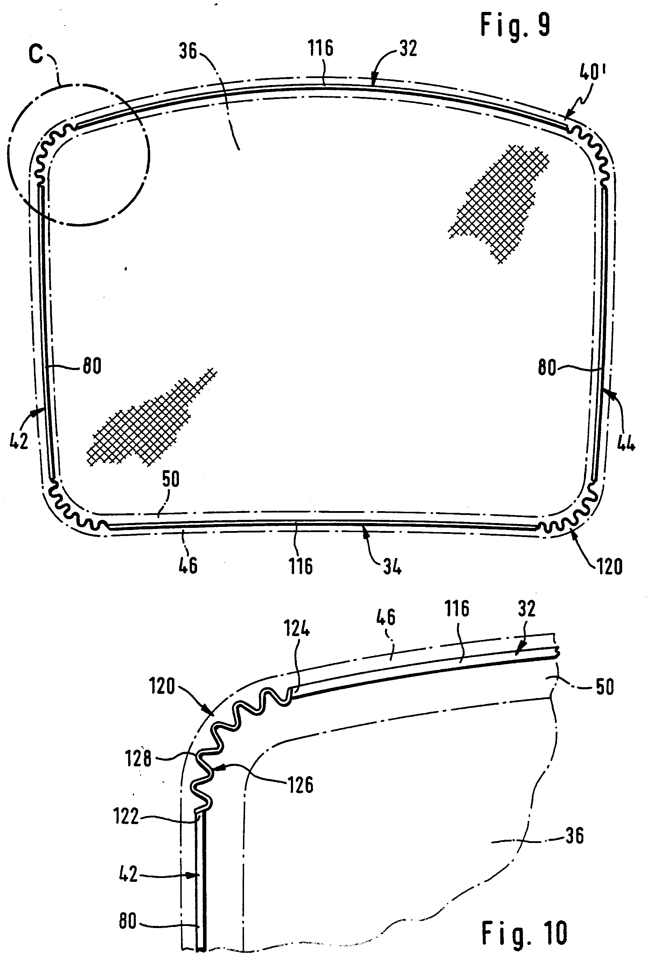

Bei einem dritten Ausführungsbeispiel, dargestellt in Fig. 9 und 10, ist der Rahmen 40 nicht zerlegbar, sondern die Spann-streben 32 und 34 und die Verbindungsstreben 42 und 44 bilden einen zusarnenhängenden Rahmen 40', wobei die Mittelteile 80 der Verbindungsstreben 42 und 44 und die Mittelteile 116 der Spannstreben 32 und 34 mittels Eckfederteilen 120 miteinander verbunden sind, die jeweils, wie in Fig. 10 dargestellt, ein Ende 122 des Mittelteils 80 einer der Verbindungsstreben, beispielsweise der Verbindungsstrebe 42, mit einem Ende 124 des Mittelteils 116 der Spannstreben, beispielsweise der Spannstrebe 32, miteinander verbinden. Die Eckfederelemente 120 sind beispielsweise aus einem federnden Materialstab 126 hergestellt, welcher in aufeinanderfolgenden Mäandern 128 gebogen ist, so daß sowohl die Spannstreben 32 und 34 als auch die Verbindungsstreben 42 und 44 in Richtung aufeinander zu federnd bewegbar sind und somit der gesamte Rahmen 40 so weit federelastisch deformierbar ist, daß entweder die Spann-streben 32 und 34 oder die Verbindungsstreben 42 und 44 oder sowohl die Spannstreben 32 und 34 als auch die Verbindungsstreben 42 und 44 mitsamt den Eckfederteilen 120 oder auch nur im Bereich der Eckfederteile 120 an der Randfläche 20 im Bereich der Lichteinfallöffnung 12 in der Innenverkleidung 18 kraftbeaufschlagt anlegbar sind, wobei sowohl die Spannstreben 32, 34 als auch die Verbindungsstreben 42, 44 und auch die Eckfederteile 120 mit dem Haltestreifen 46 überzogen sind.

Im übrigen ist der Sonnenschutz gemäß dem dritten Ausführungsbeispiel in gleicher Weise aufgebaut, wie der Sonnenschutz gemäß den ersten beiden Ausführungsbeispielen, so daß für dieselben Teile dieselben Bezugszeichen Verwendung finden und hinsichtlich der Beschreibung derselben auch auf die Ausführungen zu dem ersten und dem zweiten Ausführungsbeispiel vollinhaltlich Bezug genommen wird.

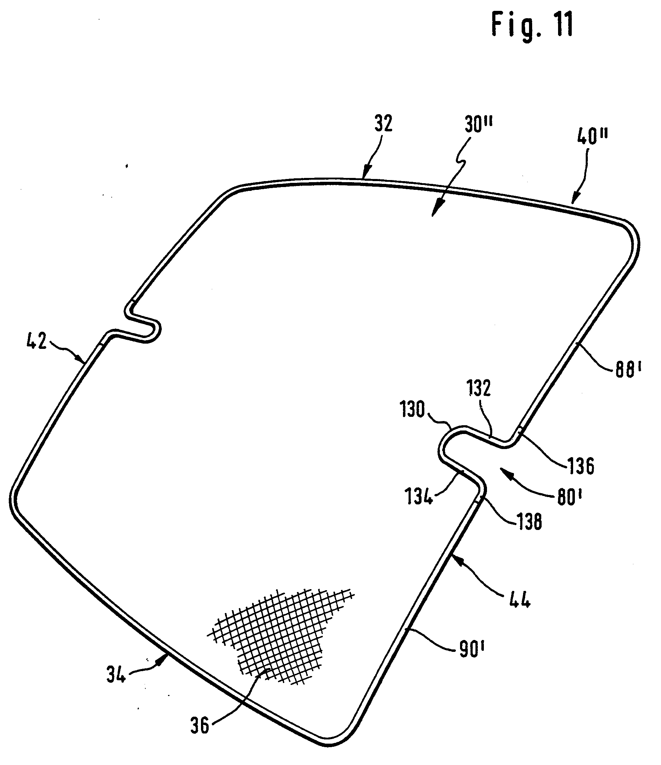

Bei einem vierten, in Fig. 11 dargestellten Ausführungsbeispiel sind ebenfalls diejenigen Teile, die mit denen der voranstehenden Ausführungsbeispiele funktionsgleich oder identisch sind, mit denselben Bezugszeichen versehen, so daß hinsichtlich der Beschreibung derselben auf die Ausführungen zu den voranstehenden Ausführungsbeispielen vollinhaltlich Bezug genommen wird.

Im Gegensatz zu dem zweiten und dritten Ausführungsbeispiel sind die Spannstreben 32 und 34 des Rahmens 40'' als im wesentlichen in sich steife Teile ausgebildet, die einstückig je in die Endteile 88' und 90' der Verbindungsstreben 42 und 44 übergehen, wobei die Endteile 88' und 90' so weit verlängert sind, daß sie fest mit einem kurz ausgebildeten Mittelteil 80' verbindbar sind, welches seinerseits nun federelastisch ausgebildet ist, beispielsweise durch einen federelastischen Stab 130, welcher U-förmig gebogen ist und mit seinen beiden U-Schenkeln 132 und 134 quer zu den Endteilen 88' und 90' verläuft, so daß eine Verbindung zwischen den U-Schenkeln 132 und 134 durch in Richtung der Endteile 88' und 90' weisende zusätzliche endseitige Umbiegungen 136 und 138 erfolgt, die jeweils quer zu den U-Schenkeln 132 und 134 und bezüglich der U-Form nach außen gerichtet verlaufen und mit den Endteilen 88' und 90' verbunden sind.

Damit ist über das Mittelteil 80' eine federelastische Längenvariabilität der Verbindungsstreben 42 und 44 in einfacher Weise realisierbar, welche die Möglichkeit schafft, in gleicher Weise wie beim ersten Ausführungsbeispiel gegen die Federkraft des Mittelteils 80' die Spannstreben 32 und 34 aufeinander zu zu bewegen, um diese in die Montagestellung und dann in der in die Lichteinfallöffnung 12 eingesetzten Stellung kraftbeaufschlagt an den Randflächen 20 der Innenverkleidung 18 anliegende Fixierstellung zu bringen. Dabei ist in gleicher Weise wie beim ersten Ausführungsbeispiel im wesentlichen lediglich ein kraftschlüssiges Verspannen des Sonnenschutzes 30'' mit Bereichen der Spannstreben 32 und 34 realisierbar, nicht jedoch mit den Verbindungsstreben 42 und 44.

## Patentansprüche

1. Lichtschutz für Lichteinfallöffnungen in Kraftfahrzeugen, dadurch gekennzeichnet, daß der Lichtschutz einen Rahmen (40) mit zwei einander gegenüberliegenden Spannstreben (32, 34) aufweist, zwischen denen eine bewegliche, ein Lichtschutzfeld abdeckende Lichtschutzmaterialbahn (36) aufspannbar ist, daß der Rahmen (40) im Abstand voneinander angeordnete Verbindungsstreben (42, 44) aufweist, mit welchen die Spannstreben (32, 34) in ihrer die Lichtschutzmaterialbahn (36) aufspannenden Stellung haltbar sind, und daß der Rahmen (40) Fixierelemente (32, 34; 42, 44; 46) aufweist, die an einem Rand (20) der Lichteinfallöffnung (12) kraftbeaufschlagt anlegbar sind und in dieser kraftbeaufschlagt angelegten Stellung den Rahmen (40) mit der Lichtschutzmaterialbahn (36) nahe der Lichteinfallöffnung (12) fixieren.

2. Lichtschutz nach Anspruch 1, dadurch gekennzeichnet, daß die Fixierelemente (32, 34; 42, 44; 46) ausgehend von einer Ruhestellung in Richtung des Lichtschutzfeldes gegen eine Kraft eines elastischen Kraftspeichers (94, 118, 126, 130) bewegbar sind.

3. Lichtschutz nach einem der voranstehenden Ansprüche, dadurch gekennzeichnet, daß die Fixierelemente (32, 34; 42, 44; 46) an den Streben des Rahmens (32, 34; 42, 44) gehalten sind.

4. Lichtschutz nach Anspruch 3, dadurch gekennzeichnet, daß die Fixierelemente (32, 34; 42, 44) zumindest Teilbereiche der Streben (32, 34; 42, 44) umfassen.

5. Lichtschutz nach einem der voranstehenden Ansprüche, dadurch gekennzeichnet, daß die Fixierelemente (32, 34; 42, 44; 46) eine rutschsichere Anlagefläche (66) aufweisen.

6. Lichtschutz nach Anspruch 5, dadurch gekennzeichnet, daß die rutschsichere Anlagefläche (66) durch einen Überzug (46) über einen Fixierelementgrundkörper (32, 34; 42, 44) gebildet ist.

7. Lichtschutz nach Anspruch 5 oder 6, dadurch gekennzeichnet, daß die rutschsichere Anlagefläche (66) durch ein an der jeweiligen Strebe (32, 34; 42, 44) angreifendes Halteelement (46) für die Lichtschutzmaterialbahn (36) gebildet ist.

8. Lichtschutz nach Anspruch 7, dadurch gekennzeichnet, daß das Halteelement (46) einen Materialstreifen aufweist, welcher U-förmig zumindest einen Teilbereich der jeweiligen Strebe (32, 34; 42, 44) umschlingt und mit über die Strebe (32, 34; 42, 44) überstehenden Bereichen (50, 52) mit der Lichtschutzmaterialbahn (36) verbunden ist.

9. Lichtschutz nach einem der voranstehenden Ansprüche, dadurch gekennzeichnet, daß der elastische Kraftspeicher (94, 118, 126, 130) für die Beaufschlagung der Fixierelemente (32, 34; 42, 44; 46) an den Streben (32, 34; 42, 44) angeordnet ist.

10. Lichtschutz nach Anspruch 9, dadurch gekennzeichnet, daß der elastische Kraftspeicher (126, 130) Teil einer Strebe (32, 34; 42, 44) ist.

11. Lichtschutz nach Anspruch 10, dadurch gekennzeichnet, daß der elastische Kraftspeicher als elastisch deformierbarer Abschnitt (126, 130) der Strebe (32, 34; 42, 44) ausgebildet ist.

12. Lichtschutz nach Anspruch 11, dadurch gekennzeichnet, daß der elastisch deformierbare Abschnitt (128, 130) der Strebe (32, 34; 42, 44) als Bogen aus einem elastisch deformierbaren Material gebildet ist.

13. Lichtschutz nach einem der voranstehenden Ansprüche, dadurch gekennzeichnet, daß die Streben (32, 34; 42, 44) mehrteilig ausgebildet sind und ein Federelement (94, 118) zwischen mindestens zwei Strebenteilen (80, 88, 90; 116, 110) vorgesehen ist.

14. Lichtschutz nach Anspruch 13, dadurch gekennzeichnet, daß die Streben (42, 44) in mehrere Strebenteile (80, 88, 90) zerlegbar sind.

15. Lichtschutz nach Anspruch 13 oder 14, dadurch gekennzeichnet, daß die Strebenteile (80, 88, 90; 116, 110) mittels Steckverbindungen (86, 114) miteinander verbunden sind.

16. Lichtschutz nach Anspruch 15, dadurch gekennzeichnet, daß in der Steckverbindung (86, 114) für die Strebenteile (80, 88, 90; 116, 110) der elastische Kraft-Speicher (94, 118) angeordnet ist.

17. Lichtschutz nach einem der voranstehenden Ansprüche, dadurch gekennzeichnet, daß die Lichtschutzmaterialbahn (36) als lichtdichte Materialbahn ausgebildet ist.

18. Lichtschutz nach einem der Ansprüche 1 bis 16, dadurch gekennzeichnet, daß die Lichtschutzmaterialbahn (36) als Sonnenschutzmaterialbahn ausgebildet ist.

19. Lichtschutz nach Anspruch 18, dadurch gekennzeichnet, daß die Lichtschutzmaterialbahn (36) mit Durchbrechungen (38) versehen ist.

20. Lichtschutz nach Anspruch 19, dadurch gekennzeichnet, daß die Lichtschutzmaterialbahn (36) als netzartiges Gewebe ausgebildet ist.

21. Lichtschutz nach einem der voranstehenden Ansprüche, dadurch gekennzeichnet, daß die Lichtschutzmaterialbahn (36) als elastische Materialbahn ausgebildet ist.

22. Lichtschutz nach einem der voranstehenden Ansprüche, dadurch gekennzeichnet, daß die Lichtschutzmaterialbahn (36) alS biegeschlaffe Materialbahn ausgebildet ist.

23. Lichtschutz nach einem der voranstehenden Ansprüche, dadurch gekennzeichnet, daß der Rahmen (40) zumindest teilweise einer Randkontur (17) der abzudeckenden Lichteinfallöffnung (12) angepaßt ist.

24. Lichtschutz nach Anspruch 23, dadurch gekennzeichnet, daß die Spannstreben (32, 34) der Randkontur (17) der abzudeckenden Lichteinfallöffnung (12) angepaßt sind.

25. Lichtschutz nach Anspruch 23 oder 24, dadurch gekennzeichnet, daß die Verbindungsstreben (42, 44) der Randkontur (17) der abzudeckenden Lichteinfallöffnung (12) angepaßt sind.

26. Kraftfahrzeug mit einer Karosserie (10) und einer in dieser vorgesehenen Lichteinfallöffnung (12), dadurch gekennzeichnet, daß in der Lichteinfallöffnung (12) ein Lichtschutz (30) nach einem der voranstehenden Ansprüche angeordnet ist.

27. Kraftfahrzeug nach Anspruch 26, dadurch gekennzeichnet, daS der Rahmen (40) des Lichtschutzes (30) zumindest teilweise an der Randkontur (17) der Lichteinfallöffnung (12) in der Karosserie (10) angelegt ist.

28. Kraftfahrzeug nach Anspruch 27, dadurch gekennzeichnet, daß die Randkontur (17) der Lichteinfallöffnung (12) durch eine Randfläche (20) einer Innenverkleidung (18) der Karosserie gebildet ist.
